# EUROPEAN PATENT APPLICATION

(11) **EP 3 151 421 A1**
(43) Date of publication of application: **05.04.2017**
(21) Application number: 15803345.6
(22) Date of filing: 27.05.2015
(51) Int. Cl.: H02S 40/38, B60R 16/02, H02J 9/06

(54) **SMART GRID SYSTEM, FOR BLACK BOX, USING PHOTOVOLTAIC POWER GENERATION**

(30) Priority: 02.06.2014 KR 20140066714
(71) Applicant: Choi, Kyu Taek, Wonju-si, Gangwon-do 220-150 (KR)
(72) Inventor: Choi, Kyu Taek, Wonju-si, Gangwon-do 220-150 (KR)
(74) Representative: Gulde & Partner
(86) International application number: PCT/KR2015/005293
(87) International publication number: WO 2015/186919

(57) **Abstract**

The present invention relates to a grid system for supplying power to a black box for a vehicle by means of photovoltaic power generation, the grid system comprising: a solar cell unit for generating power by using photovoltaic power generation; a main system for supplying a black box with the power generated from the solar cell unit; and an internal battery for storing the power which is from the main system and generated by a solar cell unit. The effectiveness is provided in which, if photovoltaic power generation is not performed due to a change in the amount of sunlight or the vehicle's parking state, discharging of a battery inside a vehicle is prevented by enabling the supply of power first from an internal battery that stores the power from photovoltaic power generation.

## Description

### [Field of the Invention]

The present invention relates to a smart grid system that supplies power to a black box for a vehicle by means of photovoltaic power generation, and particularly, relates to the smart grid system which, by the interlock of photovoltaic power generation and an inner battery of the vehicle, first supplies the power generated by means of photovoltaic power generation to the black box to which the power should always be supplied, and receives the power from an inner battery of the vehicle only when the power is not generated by means of photovoltaic power generation or only when an internal battery, which is charged by means of photovoltaic power generation, is discharged.

### [Description of the Related Art]

The industrial market size of charging systems, such as car chargers, that receive power from a battery of a vehicle or a vehicle internal power generation system and charge various types of mobile terminals during car operation, has grown remarkably due to the spread of smart phones and automobile black boxes.

Since a conventional charger for the vehicle charges mainly the mobile terminal when the driver is present inside the vehicle and the vehicle is in operation, an inner battery of the vehicle is not likely to be discharged. However, in the case of the black box, as well as during the operation of the vehicle, it is necessary to constantly monitor the surrounding conditions occurring inside and outside the vehicle even when the vehicle is not in operation, and thus the discharge of the inner battery of the vehicle is a problem.

Accordingly, the black box comprises an internal battery and can monitor the situation of the vehicle by using the power of the internal battery when the vehicle is not in operation. However, the black box cannot continuously monitor the situation of the vehicle due to the limitation of the capacity of the internal battery, and is electrically connected to the inner battery of the vehicle. Accordingly, it is a problem that the inner battery is discharged.

In recent years, there have been technical attempts to introduce a solar heat or sunlight-charge system to a black box to continuously supply power to the black box by using the power generation of the solar cell in the black box even when the vehicle is not in operation. However, there has been a problem that it becomes useless the vehicle has been parked for a long period of time.

Prior arts are Korean Patent No. 10-1036555 (Document 1) and Korean Patent Application No. 10-2002-0014187 (Document 2). Document 1 discloses a technical spirit wherein the black box for the vehicle supplies and receives power by the solar cell, but has problems as described above. Since Document 2 simply uses the power of the solar cell in order to charge the mobile terminal which does not always require power, Document 2 cannot be easily applied to the black box for the vehicle which always requires a supply of power, and has a limited technical spirit.

### [Summary of the Invention]

### [Object of the Invention]

A smart grid system for a black box using photovoltaic power generation according to the present invention has been developed to solve the above-mentioned problems of the related art. It is an object of the present invention to provide a smart grid system that can always supply power to the black box for the vehicle, and can prevent an inner battery of the vehicle from discharging.

The object of the present invention is not limited to those mentioned above, and other objects that are not mentioned could be clearly understood by a skilled person in the art from the following.

### [Constitution of the Invention]

A smart grid system for a black box using photovoltaic power generation according to the present invention has the following means in order to solve problems as described above.

The smart grid system for the black box using photovoltaic power generation according to the present invention is a grid system for supplying power to the black box for a vehicle by means of photovoltaic power generation, and the grid system may comprise: a solar cell unit that generates power by using sunlight; a main system that supplies the power generated by the solar cell unit to the black box; and an internal battery that stores the power which is generated by the solar cell unit and transmitted from the main system.

The smart grid system for the black box using photovoltaic power generation according to the present invention may comprise: a photovoltaic power generation sensing unit that is electrically connected to the solar cell unit and senses whether the solar cell unit generates the power or not; a vehicle battery power measuring unit that is electrically connected to an inner battery of the vehicle having the black box and senses the power of the inner battery; a start-sensing unit that senses whether the vehicle has been started or not; and a control unit that is electrically connected to the photovoltaic power generation sensing unit, the vehicle battery power measuring unit and the start-sensing unit, and controls a supply of the power which is generated by the solar cell unit and the power which is stored in the inner battery.

In the smart grid system for the black box using photovoltaic power generation according to the present invention, when the photovoltaic power generation sensing unit senses photovoltaic power generation, the control unit may supply the power generated by the solar cell unit to the black box and the internal battery, and cut off a supply of the power from the inner battery.

In the smart grid system for the black box using photovoltaic power generation according to the present invention, when the photovoltaic power generation sensing unit senses the cessation of photovoltaic power generation and the start-sensing unit senses a state that the vehicle has not been started, the control unit may supply the power stored in the internal battery to the black box.

In the smart grid system for the black box using photovoltaic power generation according to the present invention, when the internal battery is discharged, the control unit may receive the power from the inner battery and supply the power to the black box.

In the smart grid system for the black box using photovoltaic power generation according to the present invention, when the photovoltaic power generation sensing unit senses the cessation of photovoltaic power generation and the start-sensing unit senses a state that the vehicle has been started, the control unit may receive the power from the inner battery and supply the power to the black box.

In the smart grid system for the black box using photovoltaic power generation according to the present invention, the control unit may supply to the inner battery a dump power that is obtained by excluding the power which is supplied to the black box and the internal battery, from the power which is generated by the solar cell unit, thereby preventing the inner battery from naturally discharging.

In the smart grid system for the black box using photovoltaic power generation according to the present invention, when the vehicle battery power measuring unit senses the power which has a predetermined level, the control unit may cut off the power which is supplied from the inner battery, thereby preventing the inner battery from discharging.

### [Effect of the Invention]

A smart grid system for a black box using photovoltaic power generation according to the present invention having the above-described constitution has the following effects.

First, in a state in which the vehicle has not started, the black box can be supplied with photovoltaic-generated power in advance, thereby preventing the inner battery of the vehicle from being discharged.

Second, photovoltaic-generated power can be supplied first to the black box and surplus power can be supplied to the inner battery of the vehicle, thereby preventing the inner battery of the vehicle from naturally discharging.

Third, according to the fluctuation of the amount of sunshine and the parking environment of the vehicle, in the state where the photovoltaic power is not generated, the power can be supplied from the internal battery storing the photovoltaic-generated power.

Fourthly, when the power of the internal battery is completely consumed, the power can be supplied from the inner battery of the vehicle so as to maintain the uninterrupted monitoring function of the black box, and the power state of the inner battery of the vehicle can be monitored. If the power state of the inner battery of the vehicle reaches a predetermined level (i.e., low level of power), the power consumption of the inner battery of the vehicle can be cut off in order to prevent the inner battery from being discharged.

The effects of the present invention are not limited to those mentioned above, and other effects not mentioned would be clearly understood by a skilled person in the art from the following description.

### [Brief Description of the Drawings]

Fig. 1 is a block diagram showing the relationship among the respective constitutions of the present invention.
Fig. 2 is a block diagram showing subcomponents of a main system according to an embodiment of the present invention.

### [Detailed Description of the Invention]

A smart grid system for a black box using photovoltaic power generation according to the present invention may have various modifications and embodiments and specific embodiments will be illustrated in the drawings and described in the detailed description. It should be understood, however, that the present invention is not intended to be limited to the specific embodiments, but includes all modifications, equivalents, and alternatives falling within the spirit and scope of the present invention.

Hereinafter, the smart grid system for the black box using photovoltaic power generation according to the present invention will be described in detail with reference to the drawings.

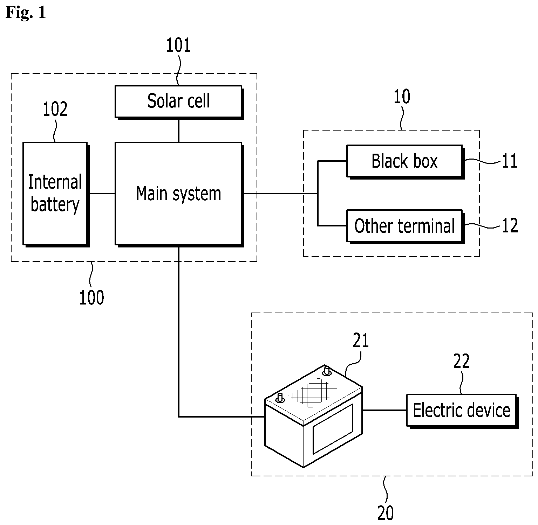

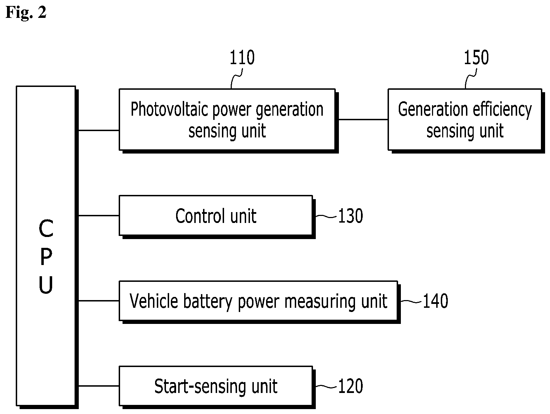

Fig. 1 is a block diagram showing the relationship among the respective constitutions of the present invention. Fig. 2 is a block diagram showing subcomponents of a main system according to an embodiment of the present invention.

The smart grid system for the black box using photovoltaic power generation according to the present invention comprises a solar cell unit 101; a main system (see Fig. 1); and an internal battery 102.

The black box, which is a subject of power consumption, is a device for shooting a video and recording a voice for the status of the vehicle during the vehicle's operation or during parking and may be provided with its own battery.

The black box is a black box that is already known and used publicly, and should be understood to comprise any kind of black box to be developed in the future.

The black box is also referred to as an EDR (event data recorder), and has been developed to provide various shooting angles through one channel, two channels or more, and the detailed description thereof could be replaced with known techniques and common sense by those skilled in the art.

Since the black box is a subject that consumes power, which is produced (i.e., generated) and supplied in the present invention, and is an object to be implemented in the practice of the present invention, the black box may be replaced with the other terminal 12. Since a mobile terminal - for example, a smartphone - instead of the black box may receive the photovoltaic-generated power, the present invention may be applied to a terminal other than the black box, which should be construed as falling within the scope of the present invention.

The solar cell unit 101 is installed outside or inside the vehicle, and the solar cell unit 101 which is installed inside the vehicle generates power by using sunlight that is irradiated into the vehicle through a glass of the vehicle.

The solar cell unit 101 basically has an anti-reflection layer, a pn junction and front electrode and back electrode structures that are disposed on both sides thereof, and generates an electric current by holes and electrons which are excited by the sunlight.

The solar cell unit 101 may be applied to a photovoltaic power generation system that is developed by a plurality of manufacturers, and a detailed description about the principle of the photovoltaic power generation is omitted.

The power, which is generated by the solar cell unit 101, is supplied to the main system to be described hereafter, and may be supplied to and stored in the internal battery 102 simultaneously or sequentially.

The main system transmits the power, which is generated by the solar cell unit 101, to the black box, operates the black box, and simultaneously or sequentially stores the power generated by the solar cell unit 101 in the internal battery 102.

The internal battery 102 is a component of the grid system according to the present invention and is a device that stores the power, which is directly generated by the solar cell unit 101. It is preferable that the battery be the latest battery which has a constant supplying voltage such as a lithium ion battery, a lithium polymer battery, etc., and can last for a long time even if charging and discharging are frequent.

The type of the internal battery 102 is not limited thereto, and a configuration capable of storing electric power is sufficient. A detailed description about the internal battery is omitted.

The main system may comprise a photovoltaic power generation sensing unit 110; a vehicle battery power measuring unit 140; a start-sensing unit 120; and a control unit 130.

In the subcomponents of the main system as illustrated in Fig. 2, the photovoltaic power generation sensing unit 110 is electrically connected to the solar cell unit 101 and senses whether the solar cell unit 101 produces (i.e., generates) the power or not. Specifically, the photovoltaic power generation sensing unit 110 is provided with an ammeter or a voltmeter therein, and measures a current of a conduction wire that is connected to the solar cell unit 101 or a voltage of both terminals that is connected to the solar cell unit 101, thereby sensing whether the solar cell unit 101 actually generates the power or not.

The photovoltaic power generation sensing unit 110 is an important component that controls the power supply state of the controller 130 which is described hereinafter. When the solar cell unit generates the power, in principle, the power is not supplied from the inner battery 21 of the vehicle to the black box, and only the photovoltaic-generated power is supplied to the black box in advance so as to store the power in the internal battery 102 simultaneously or sequentially.

The vehicle battery power measuring unit 140 senses the power of the vehicle, - particularly, the power of the inner battery of the vehicle - in which the black box, which may receive the power by the present invention, is installed. The vehicle battery power measuring unit 140 is an important component for preventing the inner battery 21 from being discharged, and particularly, the component for directly measuring the power of the inner battery 21 in order to prevent the inner battery 21 of the vehicle from being naturally discharged or to prevent the inner battery 21 of the vehicle from being discharged due to a supply of the power to the black box. The vehicle battery power measuring unit 140 itself includes an ammeter or a voltmeter and periodically detects whether or not the current or voltage of the inner battery 21 meets a predetermined level, thereby allowing the vehicle to be started.

The predetermined level may be set to a degree such that the vehicle can be started-e.g., the level such that a start motor of the vehicle can be operated and a spark plug can be ignited-and may be controlled depending on the reference condition of the vehicle and the battery.

The start-sensing unit 120 is a component that detects whether the vehicle has been started or not. The start-sensing unit 120 is electrically connected to an electric device that starts an engine of the vehicle and maintains the engine in the started state, and determines whether or not the engine of the vehicle is started. The start-sensing unit 120 provides information that can determine whether or not the power is supplied from the inner battery 21 of the vehicle, depending on the starting status of the vehicle when the solar cell unit 101 cannot generate the power.

The control unit 130 may enable on / off control of individual switches (not shown) located in various electrical connections shown in Fig. 1 and through this control, determine that the power of what position is supplied to the component of what position depending on information that is received from the photovoltaic power generation sensing unit 110; the vehicle battery power measuring unit 140; and the start-sensing unit 120 as described above.

For example, when the photovoltaic power generation sensing unit 110 senses photovoltaic power generation by the solar cell unit 101, the control unit 130 receives the information, supplies the power generated by the solar cell unit 101 to the black box 11 and the internal battery 102, and cuts off the supply of the power from the inner battery 21 regardless of whether or not the vehicle has been started.

However, when the photovoltaic power generation sensing unit 110 detects photovoltaic power generation by the solar cell unit 101 and the start-sensing unit 120 detects a state that the vehicle has not been started, the control unit 130 may supply the power generated by the solar cell unit 101 to the internal battery 102 and the black box 11, and then supplies surplus power to the inner battery 21, thereby preventing the inner battery 21 from being naturally discharged.

On the other hand, when the photovoltaic power generation sensing unit 110 detects the cessation of photovoltaic power generation-i.e., when the solar cell unit 101 cannot perform photovoltaic power generation (e.g., (i) when the illumination intensity of sunlight is not sufficient or (ii) when the vehicle is parked in an underground parking lot, to which sunlight is not irradiated-the control unit 130 supplies the power, which is stored in the internal battery 102, to the black box 11. The power, which is stored in the internal battery 102, is the power which has been generated by the solar cell unit 101 using sunlight and stored in the solar cell unit 101 in the past.

Then, when the internal battery 102 is discharged, the control unit 130 additionally receives the power from the inner battery 21 of the vehicle and supplies the power to the black box 11. When the vehicle battery power measuring unit 140 senses the predetermined level of the power as described above and determines that the discharge is likely to occur, the control unit 130 cuts off the supply of the power from the inner battery 21, thereby preventing the inner battery 21 from being discharged.

When the photovoltaic power generation sensing unit 110 detects that the photovoltaic power is not being generated, and the start-sensing unit 120 determines that the vehicle is being started, the control unit 130 receives the power from the inner battery 21 and supplies the power to the black box 11.

When the start-sensing unit 120 detects that the vehicle has been started and the photovoltaic power generation sensing unit 110 determines that the photovoltaic power is not generated, the control unit 130 supplies the power of the inner battery 21 to the internal battery 102 and charges the power in the internal battery 102. At the same time, the control unit 130 supplies the power to the black box 11.

More preferably, the photovoltaic power generation sensing unit 110 further comprises a generation efficiency sensing unit 150. The generation efficiency sensing unit 150 senses generation efficiency (power generated per hour) of the power, which is generated by the solar cell unit 101, and transmits the information of the generation efficiency to the control unit 130. The control unit 130 compares the amount of power generated per hour by the solar cell unit 101 with the amount of power generated per hour by the black box. When the power is not sufficiently generated, the control unit 130 additionally receives the power from the inner battery 21 and supplies the power to the black box 11.

It is to be understood that the scope of the present invention is defined by the claims, and the brackets used in the claims are not intended to be used for optional limitation, but rather are used for clear description of the elements.

### Reference Symbols

- 10:: terminal
- 11:: black box for a vehicle
- 12:: other terminal
- 20:: electric circuit system for a vehicle
- 21:: inner battery for a vehicle
- 22:: electric device for a vehicle
- 100:: smart grid system
- 101:: solar cell unit
- 102:: internal battery
- 110:: photovoltaic power generation sensing unit
- 120:: start-sensing unit
- 130:: control unit
- 140:: vehicle internal battery power measuring unit
- 150:: generation efficiency sensing unit

## Claims

1. A grid system for supplying power to a black box for a vehicle by means of photovoltaic power generation, the grid system comprising:
a solar cell unit that generates power by using sunlight;
a main system that supplies the power generated by the solar cell unit to the black box; and
an internal battery that stores the power which is generated by the solar cell unit and transmitted from the main system,
the main system comprising:
a photovoltaic power generation sensing unit that is electrically connected to the solar cell unit and senses whether or not the solar cell unit generates the power;
a vehicle battery power measuring unit that is electrically connected to an inner battery of the vehicle having the black box and senses the power of the inner battery;
a start-sensing unit that senses whether or not the vehicle has been started; and
a control unit that is electrically connected to the photovoltaic power generation sensing unit, the vehicle battery power measuring unit and the start-sensing unit, and controls a supply of the power which is generated by the solar cell unit and the power which is stored in the inner battery,
wherein when the photovoltaic power generation sensing unit senses photovoltaic power generation, the control unit supplies the power generated by the solar cell unit to the black box and the internal battery, and cuts off the supply of the power from the inner battery, and supplies to the inner battery a surplus power that is obtained by excluding the power which is supplied to the black box and the internal battery, from power which is generated by the solar cell unit,
thereby preventing the inner battery from being naturally discharged.
